# EUROPÄISCHE PATENTSCHRIFT

(11) **EP 1 827 724 B1**
(45) Veröffentlichungstag und Bekanntmachung des Hinweises auf die Patenterteilung: **26.03.2008**
(21) Anmeldenummer: 05817771.8
(22) Anmeldetag: 13.12.2005
(51) Int. Cl.: B21B 45/02

(54) **VERFAHREN UND VORRICHTUNG ZUM BANDABBLASEN IM AUSLAUF VON WALZWERKEN ZUR ERZEUGUNG VON TROPFENFREIEM UND SAUBEREM WALZBAND**
METHOD AND DEVICE FOR STRIP BLOWING-OFF AT THE EXIT FROM A ROLLING MILL FOR THE PRODUCTION OF A SPOT-FREE AND CLEAN ROLLED STRIP
PROCEDE ET DISPOSITIF DE NETTOYAGE DE BANDE PAR SOUFFLAGE EN SORTIE DE LAMINOIRS, PERMETTANT DE PRODUIRE UNE BANDE LAMINEE PROPRE ET SANS GOUTTE

(30) Priorität: 14.12.2004 DE 102004060086
(43) Veröffentlichungstag der Anmeldung: 05.09.2007
(73) Patentinhaber: SMS Demag AG, 40237 Düsseldorf (DE)
(72) Erfinder: DENKER, Wolfgang, 57258 Freudenberg (DE); KLAPDOR, Armin, 57399 Kirchhundem (DE)
(74) Vertreter: Klüppel, Walter
(86) Internationale Anmeldenummer: PCT/EP2005/013331
(87) Internationale Veröffentlichungsnummer: WO 2006/063779

(56) Entgegenhaltungen:
- EP-A- 0 765 696
- WO-A-00/51757
- DE-A1- 3 431 060
- DE-A1- 4 215 602
- DE-A1- 19 506 899
- PATENT ABSTRACTS OF JAPAN Bd. 1995, Nr. 08, 29. September 1995 (1995-09-29) & JP 07 132270 A (TORAY IND INC), 23. Mai 1995 (1995-05-23)

## Beschreibung

Die Erfindung betrifft ein Verfahren zum Bandabblasen im Auslauf von Walzwerken zur Erzeugung von tropfenfreiem und sauberen Walzband, bei der das Band durch mindestens eine über der Oberseite des Bandes angeordnete Düse abgeblasen und das am Band haftende Walzöl / Emulsion an den Bandkanten durch eine Saugvorrichtung abgesaugt wird sowie eine zugehörige Vorrichtung.

Speziell in Kaltwalzwerken, insbesondere beim Walzen von Aluminium mit Emulsion / Walzöl oder dem Kaltwalzen bei gleichzeitiger auslaufseitiger Walzenkühlung, sind die Anforderungen an eine Bandtrocknung sehr hoch.

Die Sauberkeit der Bandoberfläche ist von ihrer Bedeutung gleichrangig der Dickentoleranz und den Planheitswerten.

In Aluminiumwalzwerken wird aktuell mit leicht entzündlichen Walzölen gewalzt, da es zur Zeit keine funktionssicheren Bandtrocknungssysteme gibt:

Stand der Technik ist, das Band mit Hilfe von Luftdüsen abzublasen, Hierzu wird Druckluft, aber auch durch Ventilatoren erzeugte Gebläseluft eingesetzt.

Aus der EP 0 765 696 B1 ist eine Vorrichtung zum Erhalt eines von Feuchtigkeit freien Kaltbandes bekannt, bei der verschiedene Mittel zum Abweisen und Entfernen von flüssigen Walzmedien zu einer Funktionseinheit zusammengefügt werden. Durch eine fest installierte Abschottung, deren einer Teil oberhalb des Bandlaufs bis an die Gerüstbühne und deren anderer Teil unterhalb des Bandlaufs bis an die Grundplatte anschließt, wird der feucht - nasse Walzenbereich gegen das fertig gewalzte Band abgeschottet. Eine zusätzliche und aus beweglichen Teilen bestehende bewegliche Abschottung sorgt für eine weitergehende Abschottung des feucht - nassen Walzenbereichs gegen das fertig gewalzte Band, ermöglicht jedoch infolge der Beweglichkeit der Teile eine vorteilhafte Zugänglichkeit der Walzen, beispielsweise bei der Durchführung eines Walzenwechsels. Zugleich verwirklichen diese beweglichen Teile die Funktion eines Bandabweisers und / oder eines Mittels zur Bandüberleitung. Die als Anschläge ausgebildeten beweglichen Teile können dabei wahlweise mechanisch fest oder walzenballen - abschliffabhängig einstellbar sein.

Weitere installierte Bestandteile aus der EP 0 765 696 B1 sind:
- eine Walzballenabblasung zur Verhinderung, dass abgequetschtes Walzmedium auf das fertig gewalzte Walzband übertragen wird,
- eine Walzenballenspaltabdichtung, die den feucht - nassen Walzenraum oberhalb des Walzbandes gegen das fertig gewalzte Walzband abdichtet,
- eine Bandkantenabblasung, durch die das mitgerissene Walzöl seitlich der Bandkante vom Walzband seitlich weggeführt wird, und
- eine Dunstabsaugung im Bandkanal mit einer oberhalb und unterhalb des Walzbandes entgegen der Bandlaufrichtung gerichteten parallelen Luftströmung.

Ähnliche Vorrichtungen zum Trockenhalten von insbesondere Kaltband im Auslauf von Walzanlagen sind aus US 6 134 811 A, DE 195 19 544 A, DE 43 05 907 A und JP 07 178 438 A bekannt.

In einer Weiterentwicklung der EP 0 765 696 B1 ist gemäß der WO 03 / 068 426 A1 bei einer Vorrichtung zum Trockenhalten von Kaltband im Auslauf von Walzanlagen mit Mitteln zum Abweisen von flüssigen Walzmedien im Bereich des Bandauslaufs und / oder zum Fernhalten von an die Bandoberflächen spritzende Flüssigkeit, wobei diese zu einer Funktionseinheit zusammenwirkende Mittel aus oberhalb und unterhalb des Walzbandes angeordneten fest installierten Abschottungen und beweglichen Abschottungen, einer Walzenballen - Abblasung, einer Walzenballen - Spaltabdichtung und einer Dunstabsaugung bestehen, vorgesehen, einen oberhalb des Walzbandes angeordneten oberen Bandabweiser mit integrierter ventilatorbetriebener Bandabblasung mittels einer Niederdruckdüse und mit einer oberen Walzenballen - Spaltabdichtung in Form einer Schlitzdüse sowie eine unterhalb des Walzbandes angeordnete separate Absaugeinrichtung mit integriertem unteren Bandabweiser anzuordnen.

Das Band verlässt die Walzanlage / das Walzgerüst mit einer Geschwindigkeit, die in der Nähe des Bandes einen Unterdruck verursacht. Es wurde erkannt, dass dieser Unterdruck der Forderung nach einem trockenen und von Verunreinigungen freien Band entgegensteht, da die Bandabblasung entgegen der Walzrichtung gerichtet ist (Bernoulli - Effekt) und die Wirkung des Bandabblasens vermindert.

Der Erfindung liegt daher die Aufgabe zugrunde, ein Verfahren und eine Vorrichtung der eingangs beschriebenen Art so auszubilden, dass die Wirkung des Bandabblasens erhöht wird und ein von Flüssigkeiten und Verunreinigungen freies Band vorliegt.

Diese Aufgabe wird erfindungsgemäß dadurch gelöst, dass bei einem Verfahren gemäß dem Oberbegriff von Anspruch 1 an der Oberseite und der Unterseite des Bandes ein Raum gebildet wird, in dem ein Überdruck vorhanden ist.

Vorteilhafte Ausgestaltungen des Verfahrens sind in den Unteransprüchen angegeben.

Bei einer erfindungsgemäßen Vorrichtung nach Anspruch 7 ist oberhalb des Bandes eine obere Abdeckung mit mindestens einer Überdruckdüse angeordnet, unterhalb des Bandes ist eine untere Abdeckung mit mindestens einer Überdruckdüse angeordnet und jeweils am Anfang, in Walzrichtung gesehen, der oberen und der unteren Abdeckung ist eine berührungslose Abdichtung angeordnet, wodurch ein Raum gebildet wird, in dem ein Überdruck bestehen bleibt.

Vorteilhafte Ausgestaltungen der Vorrichtung sind in den nachfolgenden Unteransprüchen angegeben.

Der entscheidende Vorteil des erfindungsgemäßen Verfahrens und der erfindungsgemäßen Vorrichtung liegt darin, dass oberhalb und unterhalb des Bandes ein Überdruck vorhanden ist, der noch anhaftendes Walzöl / Emulsion zur Bandkante leitet und in der Umgebung des Bandes vorhandene Verunreinigungen wie Staub, Partikel usw. von dem Band ferngehalten werden. Dadurch, dass an den den Arbeitswalzen zugewandten Enden der oberen und unteren Bandabdeckung eine berührungslose Abdichtung vorgesehen ist, entsteht ein geschlossener Raum, der das Band allseitig umgibt.

Neben dem Einsatz von Luft / Druckluft kann je nach Material und Vorgaben auch ein anderes Gas, flüssiger Stickstoff oder CO₂ verwendet werden. Beim Einsatz von CO₂ ist beispielsweise eine Verbindung, beispielsweise mittels eines Umschalt - Ventils, mit der Feuerlöschanlage möglich.

Zusätzlich zu den Überdruckdüsen werden die Bandkanten durch zusätzliche Düsen beaufschlagt (Bandkantenabblasung).

Ein Ausführungsbeispiel der Erfindung wird anhand von sehr schematischen Zeichnungen näher beschrieben. Es zeigen:
- Fig. 1: ein Walzgerüst mit nachfolgender Vorrichtung zum Abblasen eines Bandes in einem Vertikalschnitt in Walzrichtung;
- Fig. 2: die Vorrichtung zum Abblasen des Bandes im Vertikalschnitt quer zur Walzrichtung;
- Fig. 3: Strömungswege eines Luftstromes nach einer Überdruckdüse auf der oberen Bandseite in Draufsicht und
- Fig. 4: Strömungswege eines Luftstromes nach einer Überdruckdüse auf der unteren Bandseite in Draufsicht.

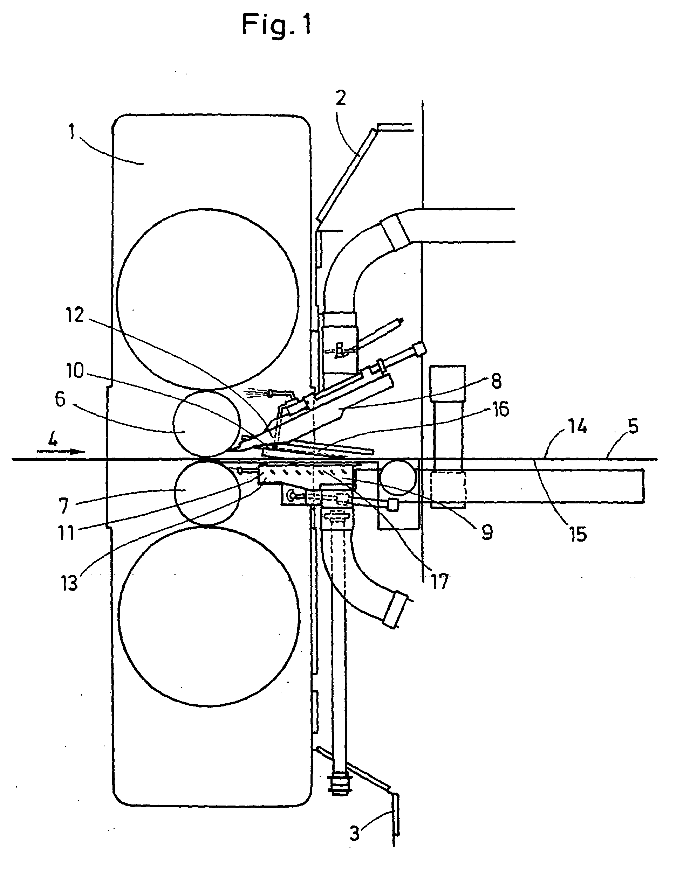

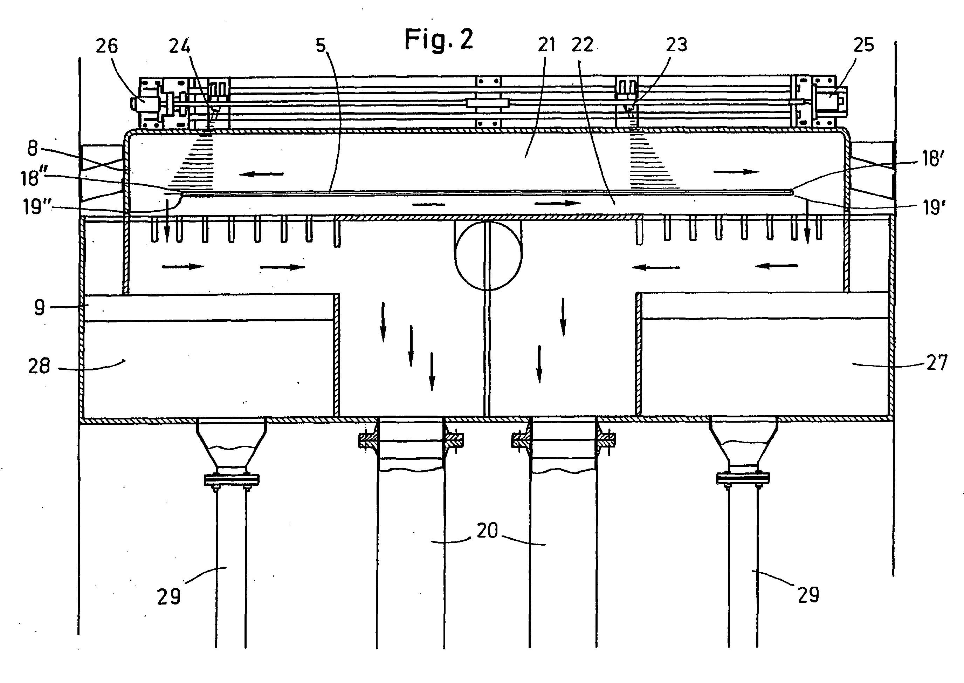

In der Figur 1 ist ein Walzgerüst 1 mit einer fest installierten oberen Abschottung 2 und einer fest installierten unteren Abschottung 3 dargestellt. Das in Walzrichtung - Pfeil 4 - transportierte Band 5 gelangt hinter den Arbeitswalzen 6, 7 zwischen eine obere Bandabdeckung 8 und eine untere Bandabdeckung 9. An den jeweiligen Enden 10 und 11 der oberen Bandabdeckung 8 und der unteren Bandabdeckung 9, die den Arbeitswalzen 6 und 7 am nächsten sind, sind Vorrichtungen 12 und 13 zur berührungslosen Abdichtung angeordnet. Hierzu eignet sich insbesondere eine Abdichtung, wie sie in der DE 44 22 422 A1 beschrieben ist. Diese berührungslose Abdichtung trennt den Bereich der Arbeitswalzen 6, 7 vollständig von dem Bereich des Bandabblasens, da die Vorrichtungen zur Abdichtung sowohl oberhalb als auch unterhalb des Bandes 5 angeordnet sind. In dem Bereich des Bandes 5, der von der oberen Bandabdeckung 8 und der unteren Bandabdeckung 9 gebildet wird, wird auf beide Seiten des Bandes 5, der Oberseite 14 und der Unterseite 15, mittels Überdruckdüsen 16, 17 ein Überdruck - Luftstrom aufgebaut. Dieser Überdruck -Luftstrom ist entgegen der Walzrichtung 4 gerichtet und leitet das noch an / auf dem Band 5 befindliche Walzöl zu den oberen und unteren Bandkanten 18, 19 (Figur 2). Vor dort gelangt das Walzöl in eine Absaugvorrichtung 20, die unterhalb der unteren Bandabdeckung 9 angeordnet ist.

Durch den oberhalb und unterhalb des Bandes 5 vorhandenen Überdruck - Luftstrom wird der durch die Bandgeschwindigkeit erzeugte Unterdruck im Bereich des Bandes 5 kompensiert und überlagert. Das noch anhaftende Walzöl und die in der Umgebung des Bandes 5 vorhandene Verunreinigungen werden nicht mehr zum Band 5 hingeleitet sondern durch den Überdruck - Luftstrom vom Band 5 entfernt bzw. ferngehalten.

Eine erfindungsgemäße Vorrichtung aus oberer Bandabdeckung 8 und unterer Bandabdeckung 9 ist in Figur 2 dargestellt. Dabei ist die untere Bandabdeckung 9 als Tisch ausgebildet und die obere Bandabdeckung 8 als u-förmige Haube. Die obere Bandabdeckung 9 ist mit einer Überdruckdüse (nicht dargestellt) verbunden, die einen Überdruck - Luftstrom auf die Oberseite 14 des Bandes 5 leitet. Der Überdruck- Luftstrom wird seitlich in Richtung rechte obere Bandkante 18' und linke obere Bandkante 18" geleitet. In dem Raum 21 oberhalb des Bandes 5 herrscht ein Überdruck.

Eine weitere Überdruckdüse ist auf die Unterseite 15 des Bandes 5 gerichtet und erzeugt unterhalb des Bandes 5 im Raum 22 einen Überdruck. Der Überdruck befördert zusätzlich Reste des Walzöles zu den unteren rechten und linken Bandkanten 19', 19".

Wie in Figur 2 zusätzlich dargestellt, können die Bandkanten 18', 18" mittels separater Düsen 23, 24 abgeblasen werden. Diese zusätzlichen Düsen 23, 24 sind beispielsweise beweglich angeordnet und können mittels Stellmotoren 25, 26 unterschiedlichen Bandbreiten angepasst werden, so dass die Düsen 23, 24 immer auf die Bandkanten 18', 18" gerichtet sind. Das von dem Band 5 entfernte Walzöl wird in unterhalb der unteren Bandabdeckung 9 angeordneten Walzöl -Vorabscheidern 27, 28 aufgefangen und von dort durch Leitungen 29 abgeleitet. Der Überdruck - Luftstrom wird unterhalb des Tisches bzw. der unteren Bandabdeckung 9 durch ein Saugsystem 20 abgesaugt und in nachfolgenden Vorrichtungen gefiltert. Es versteht sich von selbst, dass das Saugsystem 20 so eingestellt ist, dass in Raum 21 und in Raum 22 ein Überdruck bestehen bleibt.

Da der beim Walzen auftretende Unterdruck im Bereich des Bandes 5 variiert und abhängig ist von der Bandgeschwindigkeit, der Bandbreite, der Oberflächenbeschaffenheit usw. ist eine Regelung vorgesehen, die einen festgelegten Überdruck - Luftstrom einstellt.

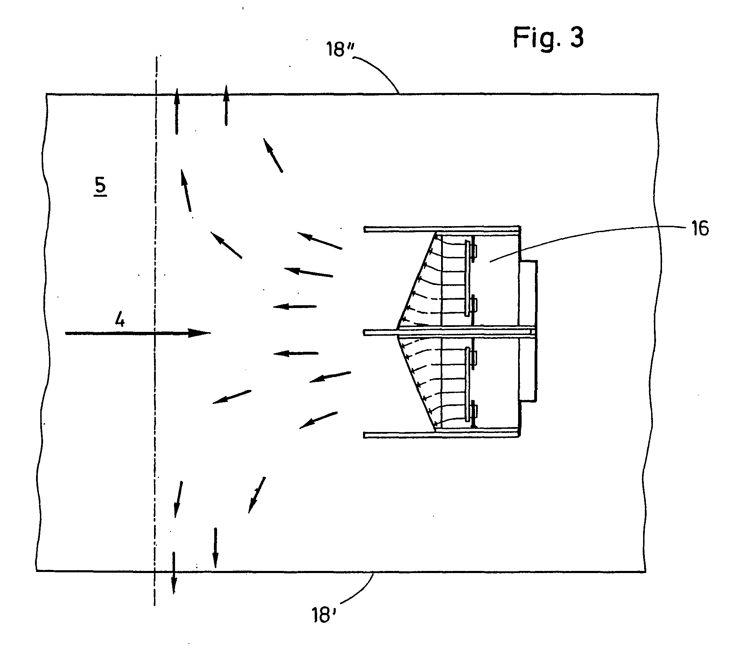

In Figur 3 sind die Strömungswege der aus der Überdruckdüse 16, die mit einer oberen Bandabdeckung 8 verbunden ist, austretenden Luft auf der Oberseite 14 des Bandes 5 dargestellt. Die Überdruckdüse 16 ist dabei mittig über dem Band 5 angeordnet. Durch in die Überdruckdüse 16 eingebaute Leitbleche wird der Luftstrom fächerförmig seitlich abgelenkt. Hierdurch wird erreicht, dass das noch auf dem Band 5 befindliche Walzöl entgegen der Walzrichtung 4 zu den Bandkanten 18', 18" geleitet wird und von dort durch die unterhalb des Bandes 5 angeordnete Saugeinrichtung 20 abgesaugt wird. Durch den Überdruck - Luftstrom wird weiterhin ein Luftpolster aufgebaut, das ein Anlagern von Verunreinigungen auf dem Band 5 verhindert, indem die Verunreinigungen durch den Überdruck - Luftstrom von dem Band 5 ferngehalten werden.

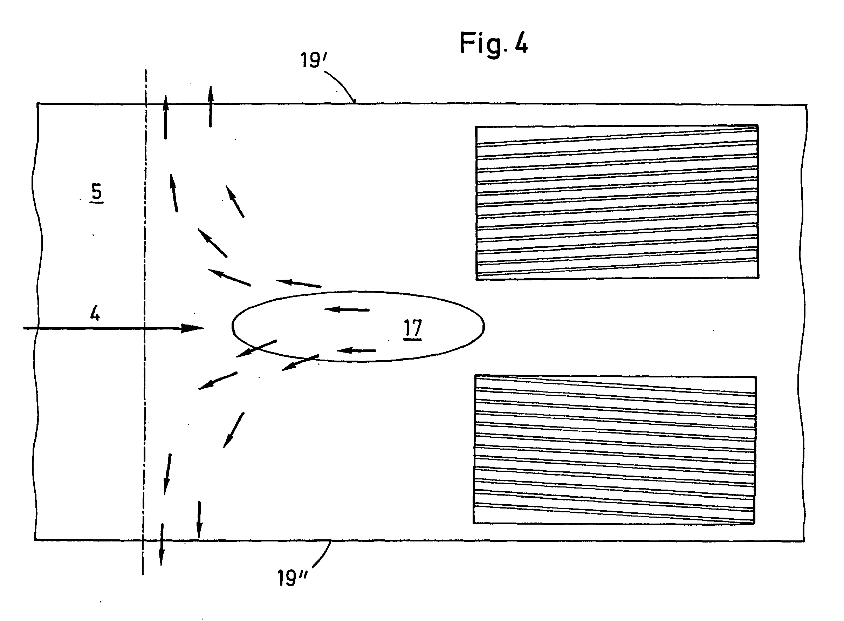

Eine entsprechende Überdruckdüse 17, welche auf die Unterseite 15 des Bandes 5 gerichtet ist, ist in Figur 4 dargestellt. Die wiederum mittig angeordnete Überdruckdüse 17 wird in einem Winkel unterhalb der unteren Bandabdeckung 9 angebracht. Die beispielsweise als Tisch ausgebildete untere Bandabdeckung 9 erhält dadurch eine ovale Öffnung, durch welche der Überdruck - Luftstrom entgegen der Walzrichtung 4 geleitet wird. Auch auf der Unterseite 15 des Bandes 5 wird das noch anhaftende Walzöl durch den Überdruck- Luftstrom zu den Bandkanten 19', 19" hin geleitet und wird von dort mittels der unterhalb angeordneten Saugeinrichtung 20 abgesaugt.

Erfindungsgemäß können oberhalb und / oder unterhalb des Bandes auch mehrere Überdruckdüsen vorgesehen werden. Die Anzahl und Anordnung ist beispielsweise abhängig von der Bandbreite oder den vorhandenen Ventilatoren. Es ist auch denkbar, dass mehrere Absaugeinrichtungen vorgesehen sind.

### Bezugszeichenliste

- 1: Walzgerüst
- 2: obere Abschottung
- 3: untere Abschottung
- 4: Pfeil Walzrichtung
- 5: Band
- 6: Arbeitswalze
- 7: Arbeitswalze
- 8: obere Bandabdeckung
- 9: untere Bandabdeckung
- 10: Ende Bandabdeckung
- 11: Ende Bandabdeckung
- 12: Vorrichtung
- 13: Vorrichtung
- 14: Oberseite
- 15: Unterseite
- 16: Überdruckdüse
- 17: Überdruckdüse
- 18: obere Bandkante
- 19.: untere Bandkante
- 18',18": rechte und linke obere Bandkante
- 19',19": rechte und linke untere Bandkante
- 20: Saugvorrichtung
- 21: Raum
- 22: Raum
- 23: Düse
- 24: Düse
- 25: Stellmotor
- 26: Stellmotor
- 27: Vorabscheider
- 28: Vorabscheider
- 29: Leitung

## Patentansprüche

1. Verfahren zum Bandabblasen im Auslauf von Walzwerken zur Erzeugung von tropfenfreiem und sauberen Walzband, bei der das Band (5) durch mindestens eine über der Oberseite (14) des Bandes (5) angeordnete Düse (16) abgeblasen und das am Band (5) haftende Walzöl / Emulsion an den Bandkanten (18', 18") durch eine Saugvorrichtung (20) abgesaugt wird,
**dadurch gekennzeichnet,**
**dass** an der Oberseite (14) und der Unterseite (15) des Bandes (5) ein Raum (21, 22) gebildet wird, in dem ein Überdruck vorhanden ist.

2. Verfahren nach Anspruch 1,
**dadurch gekennzeichnet,**
**dass** der Überdruck in Raum (21) und in Raum (22) durch Einleitung eines Gases mittels Überdruckdüsen (16, 17) erzeugt wird.

3. Verfahren nach Anspruch 1 oder 2,
**dadurch gekennzeichnet,**
**dass** die Räume (21, 22) durch eine bewegliche obere Bandabdeckung (8) und eine bewegliche untere Bandabdeckung (9) gebildet werden.

4. Verfahren nach einem der Ansprüche 1 bis 3,
**dadurch gekennzeichnet,**
**dass** an dem Ende (10) der oberen Bandabdeckung (8) und dem Ende (11) der unteren Bandabdeckung (9) eine Vorrichtung (12, 13) zum berührungslosen Abdichten angebracht wird.

5. Verfahren nach Anspruch 4,
**dadurch gekennzeichnet,**
**dass** zum berührungslosen Abdichten eine Vorrichtung nach DE 44 22 422 A1 eingesetzt wird.

6. Verfahren nach einem der Ansprüche 1 bis 5,
**dadurch gekennzeichnet,**
**dass** Verunreinigungen und / oder Walzöl / Emulsion durch eine unterhalb des Bandes (5) angebrachte Saugvorrichtung (20) abgesaugt wird.

7. Vorrichtung zum Bandabblasen im Auslauf von Walzwerken zur Erzeugung von tropfenfreiem und sauberen Walzband, mit mindestens einer über der Oberseite (14) des Bandes (5) angeordnete Düse (16) und mindestens einer Saugvorrichtung (20) unterhalb der Bandkanten (18', 18") des Bandes (5), insbesondere zur Durchführung des Verfahrens nach Anspruch 1,
**dadurch gekennzeichnet,**
**dass** oberhalb des Bandes (5) eine obere Bandabdeckung (8) mit mindestens einer Überdruckdüse (16), unterhalb des Bandes (5) eine untere Bandabdeckung (9) mit mindestens einer Überdruckdüse (17) und an dem Ende (10) der oberen Bandabdeckung (8) und dem Ende (11) der unteren Bandabdeckung (9) jeweils mindestens eine berührungslose Abdichtung (12, 13) angeordnet ist und einen Raum (21, 22) bilden, in dem ein Überdruck bestehen bleibt.

8. Vorrichtung nach Anspruch 7,
**dadurch gekennzeichnet,**
**dass** die untere Bandabdeckung (9) als Tisch ausgebildet ist.

9. Vorrichtung nach Anspruch 7,
**dadurch gekennzeichnet,**
**dass** die obere Bandabdeckung (8) als u - förmige Haube ausgebildet ist.

10. Vorrichtung nach einem der Ansprüche 7 bis 9,
**dadurch gekennzeichnet,**
**dass** die Überdruckdüsen (16, 17) unter einem Winkel an der oberen Bandabdeckung (8) und der unteren Bandabdeckung (9) befestigt sind.

11. Vorrichtung nach einem der Ansprüche 7 bis 10,
**dadurch gekennzeichnet,**
**dass** oberhalb der oberen rechten und linken Bandkante (18', 18") mindestens eine Düse (23, 24) angeordnet ist.

12. Vorrichtung nach Anspruch 11,
**dadurch gekennzeichnet,**
**dass** die Düsen (23, 24) mit einem Stellmotor verbunden sind.

13. Vorrichtung nach Anspruch 11,
**dadurch gekennzeichnet,**
**dass** jede Düse (23, 24) mit einem Stellmotor(25, 26) verbunden ist.

## Claims

1. Method for strip blowing off in the outlet of rolling mills for producing drop-free and clean rolled strip, in which the strip (5) is blown off by at least one nozzle (16) arranged above the upper side (14) of the strip (5) and the rolling oil / emulsion adhering to the strip (5) is sucked away at the strip edges (18', 18") by a suction device (20), **characterised in that** a space (21, 22) in which an excess pressure is present is formed at the upper side (14) and the lower side (15) of the strip (5).

2. Method according to claim 1, **characterised in that** the excess pressure is produced in space (21) and in space (22) by introduction of a gas by means of excess-pressure nozzles (16, 17).

3. Method according to claim 1 or 2, **characterised in that** the spaces (21, 22) are formed by a movable upper strip cover (8) and a movable lower strip cover (9).

4. Method according to one of claims 1 to 3, **characterised in that** a device (12, 13) for contactless sealing is mounted at the end (10) of the upper strip cover (8) and the end (11) of the lower strip cover (9).

5. Method according to claim 4, **characterised in that** a device according to DE 44 22 422 A1 is used for the contactless sealing.

6. Method according to one of claims 1 to 5, **characterised in that** contaminations and/or rolling oil / emulsion is or are sucked away by a suction device (20) mounted below the strip (5).

7. Device for strip blowing away in the outlet of rolling mills for producing drop-free and cleaner rolled strip, with at least one nozzle (16) arranged above the upper side (14) of the strip (5) and at least one suction device (20) below the strip edges (18', 18") of the strip (5), particularly for carrying out the method according to claim 1, **characterised in that** an upper strip cover (8) with at least one excess pressure nozzle (16) is arranged above the strip (5), a lower strip cover (9) with at least one excess pressure nozzle (17) is arranged below the strip (5) and at least one respective contactless seal (12, 13) is arranged at each of the end (10) of the upper strip cover (8) and the end (11) of the lower strip cover (9) and form a space (21, 22) in which an excess pressure is maintained.

8. Device according to claim 7, **characterised in that** the lower strip cover (9) is formed as a table.

9. Device according to claim 7, **characterised in that** the upper strip cover (8) is formed as a U-shaped hood.

10. Device according to one of claims 7 to 9, **characterised in that** the excess pressure nozzles (16, 17) are fastened at an angle to the upper strip cover (8) and the lower strip cover (9).

11. Device according to one of claims 7 to 10, **characterised in that** at least one nozzle (23, 24) is arranged above the upper righthand and lefthand strip edge (18', 18").

12. Device according to claim 11, **characterised in that** the nozzles (23, 24) are connected with a setting motor.

13. Device according to claim 11, **characterised in that** each nozzle (23, 24) is connected with a setting motor (25, 26).

## Revendications

1. Procédé pour le soufflage d'une bande à la sortie de laminoirs pour produire une bande laminée exempte de gouttes et propre, dans lequel la bande (5) est soufflée par au moins une buse (16) disposée au-dessus de la face supérieure (14) de la bande (5) et l'huile de laminage/émulsion adhérant à la bande (5) est aspirée au niveau des bords (18', 18") de la bande par un dispositif d'aspiration (20), **caractérisé en ce qu'**un espace (21, 22) est formé au niveau de la face supérieure (14) et de la face inférieure (15) de la bande (5), dans lequel il règne une surpression.

2. Procédé selon la revendication 1, **caractérisé en ce que** la surpression dans l'espace (21) et dans l'espace (22) est réalisée par l'introduction d'un gaz au moyen de buses à surpression (16, 17).

3. Procédé selon la revendication 1 ou 2, **caractérisé en ce que** les espaces (21, 22) sont formés par un recouvrement (8) supérieur mobile de bande et un recouvrement (9) inférieur mobile de bande.

4. Procédé selon l'une quelconque des revendications 1 à 3, **caractérisé en ce qu'**un dispositif (12, 13) destiné à réaliser une étanchéité sans contact est agencé au niveau de l'extrémité (10) du recouvrement (8) supérieur de bande et de l'extrémité (11) du recouvrement (9) inférieur de bande.

5. Procédé selon la revendication 4, **caractérisé en ce qu'**on utilise, pour réaliser une étanchéité sans contact, un dispositif selon le document DE 44 22 422 A1.

6. Procédé selon l'une quelconque des revendications 1 à 5, **caractérisé en ce que** des impuretés et/ou l'huile de laminage/émulsion sont aspirées par un dispositif d'aspiration (20) disposé sous la bande (5).

7. Dispositif pour le soufflage d'une bande à la sortie de laminoirs pour produire une bande laminée exempte de gouttes et propre, présentant au moins une buse (16) disposée au-dessus de la face supérieure (14) de la bande (5) et au moins un dispositif d'aspiration (20) sous les bords (18', 18") de la bande (5), en particulier pour réaliser le procédé selon la revendication 1, **caractérisé en ce qu'**un recouvrement (8) supérieur de bande avec au moins une buse à surpression (16) est disposé au-dessus de la bande (5), un recouvrement (9) inférieur de bande avec au moins une buse à surpression (17) est disposé au-dessous de la bande (5) et un dispositif pour réaliser une étanchéité (12, 13) sans contact est à chaque fois disposé au niveau de l'extrémité (10) du recouvrement (8) supérieur de la bande et au niveau de l'extrémité (11) du recouvrement (9) inférieur de bande et lesdits dispositifs forment un espace (21, 22) dans lequel règne une surpression.

8. Dispositif selon la revendication 7, **caractérisé en ce que** le recouvrement (9) inférieur de bande est réalisé sous forme d'une table.

9. Dispositif selon la revendication 7, **caractérisé en ce que** le recouvrement (8) supérieur de bande est réalisé sous forme d'un capot en forme de U.

10. Dispositif selon l'une quelconque des revendications 7 à 9, **caractérisé en ce que** les buses à surpression (16, 17) sont fixées sous un angle au recouvrement (8) supérieur et au recouvrement (9) inférieur de bande.

11. Dispositif selon l'une quelconque des revendications 7 à 10, **caractérisé en ce qu'**au moins une buse (23, 24) est disposée au-dessus du bord supérieur droit et du bord supérieur gauche (18', 18") de la bande.

12. Dispositif selon la revendication 11, **caractérisé en ce que** les buses (23, 24) sont reliées à un moteur de réglage.

13. Dispositif selon la revendication 11, **caractérisé en ce que** chaque buse (23, 24) est reliée à un moteur de réglage (25, 26).
